(19) Europäisches Patentamt / European Patent Office / Office européen des brevets

(11) **EP 4 376 024 A1**

(12) **EUROPEAN PATENT APPLICATION**
published in accordance with Art. 153(4) EPC

(43) Date of publication:
**29.05.2024 Bulletin 2024/22**

(21) Application number: **22846229.7**

(22) Date of filing: **20.07.2022**

(51) International Patent Classification (IPC):
**H01B 1/02** (2006.01)        **H01B 1/22** (2006.01)
**B82Y 40/00** (2011.01)

(52) Cooperative Patent Classification (CPC):
**H01B 1/02; H01B 1/22;** B82Y 40/00

(86) International application number:
**PCT/KR2022/010629**

(87) International publication number:
**WO 2023/003359 (26.01.2023 Gazette 2023/04)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **20.07.2021 KR 20210094841**
**19.07.2022 KR 20220089004**

(71) Applicant: **Bioneer Corporation**
**Daejeon 34302 (KR)**

(72) Inventors:
• **PARK, Han-Oh**
  **Sejong 30151 (KR)**
• **KIM, Jae-Ha**
  **Daejeon 34169 (KR)**
• **KIM, Jun Pyo**
  **Daejeon 34008 (KR)**
• **YUN, Kug Jin**
  **Daejeon 35347 (KR)**

(74) Representative: **Kraus & Lederer PartGmbB**
**Thomas-Wimmer-Ring 15**
**80539 München (DE)**

(54) **METAL NANOWIRE HAVING CORE-SHELL STRUCTURE**

(57)    The present invention relates to a metal nanowire having a core-shell structure, the metal nanowire being conductive and transparent while having excellent oxidation stability, and being capable of maintaining excellent oxidation stability even after a secondary process using the metal nanowire of the present invention. Specifically, the metal nanowire having a core-shell structure, according to the present invention, comprises a core containing copper, and a shell containing silver on the core, wherein the ratio (D/L) of the diameter (D) of the core to the thickness (L) of the shell is 10-60, the thickness of the shell is 5-40 nm, and the peak intensity ($I_1$) of Ag $3d_{5/2}$ of silver and the peak intensity ($I_2$) of Cu $2p_{3/2}$ of copper in the X-ray photoelectron spectrum satisfy the following Equation 1.

(Equation 1)

$$I_2/I_1 \leq 0.2$$

[FIG. 6]

EP 4 376 024 A1

**Description**

[Technical Field]

The present invention relates to a metal nanowire having a core-shell structure, and more particularly, to a metal nanowire having a core-shell structure which may effectively prevent oxidation of a core metal by a shell which is uniformly and thinly formed on a core and has significantly improved durability.

[Background Art]

Recently, in order to replace indium tin oxide (ITO), conductive polymers, carbon nanotubes, graphene, and the like which are conventional conductive materials and also improve both conductivity and transparency, a conductive metal such as copper, silver, nickel, and indium is applied as a replacement by reducing its size to a nanoscale size.
Among them, a copper nanowire has advantages such as high conductivity, flexibility, transparency, and low price, and is emerging as a material to replace indium tin oxide (ITO) which has been mainly used in a display. In particular, the copper nanowire may be used for a wide variety of purposes such as low-emissivity windows, touch-sensitive control panels, solar cells, and electromagnetic shielding materials, due to its characteristics of a transparent conductor.
However, when the copper nanowire is exposed to air for a long time, an oxidation phenomenon occurs to form a copper oxide, and the oxidation phenomenon proceeds more rapidly as the temperature rises, and thus, the copper oxide has a significantly decreased electrical conductivity as compared with pure copper. Therefore, when copper is not physically and/or chemically completely blocked from a contact with oxygen, its use may be limited due to the deterioration of electrical properties.
In order to prevent production of a copper oxide, Korean Patent Registration No. 10-1991964 provides a nanowire having a core-shell structure, but which has a high possibility of copper oxide production from problems such as quality uniformity of a shell coated on a nanowire for oxidation prevention or exposure of a core metal due to cutting of nanowire during secondary processing using the nanowire.
Thus, a metal nanowire having improved durability, which has both excellent conductivity and excellent oxidation stability, is structurally stable, and may maintain oxidation stability even after secondary processing, needs to be developed.

[Related Art Document]

[Patent Document]

Korean Patent Registration No. 10-1991964

[Disclosure]

[Technical Problem]

An object of the present invention is to provide a metal nanowire having a core-shell structure which has characteristics of conductivity and transparency and also has excellent oxidation stability.
Another object of the present invention is to provide a metal nanowire having a core-shell structure which has improved durability by maintaining oxidation stability even during secondary processing, using the metal nanowire of a core-shell structure of the present invention.

[Technical Solution]

In one general aspect, a metal nanowire having a core-shell structure includes: a core containing copper and a shell containing silver on the core, wherein a ratio (L/D) between a diameter (D) of the core and a thickness (L) of the shell is 10 to 60, the thickness of the shell is 5 to 40 nm, and a peak intensity ($I_1$) of Ag $3d_{5/2}$ of silver and a peak intensity ($I_2$) of Cu $2p_{3/2}$ of copper in an X-ray photoelectron spectroscopy spectrum satisfy the following Equation 1:

$$(\text{Equation 1})$$

$$I_2/I_1 \leq 0.2$$

In the metal nanowire according to an exemplary embodiment of the present invention, the metal nanowire may have a diameter of 110 to 500 nm and an aspect ratio of 5 to 100.

In the metal nanowire according to an exemplary embodiment of the present invention, the core of the metal nanowire may have a diameter of 100 to 400 nm.

In the metal nanowire according to an exemplary embodiment of the present invention, the peak of Ag $3d_{5/2}$ of silver in the X-ray photoelectron spectroscopy spectrum may be made up of a peak of metallic silver ($Ag^0$).

In the metal nanowire according to an exemplary embodiment of the present invention, a content of copper oxide (CuO) contained in the core may be 2 wt% or less of the total weight of the core.

In the metal nanowire according to an exemplary embodiment of the present invention, a FWHM of a (111) crystal plane of silver contained in the shell may be larger than a FWHM of a (111) crystal plane of copper contained in the core.

In the metal nanowire according to an exemplary embodiment of the present invention, the metal nanowire may have an oxidation initiation temperature of 250°C or higher.

In the metal nanowire according to an exemplary embodiment of the present invention, the peak intensity ($I_1$) of Ag $3d_{5/2}$ of silver and the peak intensity ($I_2$) of Cu $2p_{3/2}$ of copper in the X-ray photoelectron spectroscopy spectrum may satisfy the following Equation 2:

$$(\text{Equation 2})$$

$$I_2/I_1 \leq 0.05$$

In the metal nanowire according to an exemplary embodiment of the present invention, in a conductive film having a thickness of 8 um including the metal nanowire, a resistivity change rate may be 103% or less, the resistivity change rate being a ratio of a resistivity value measured after allowing the conductive film to stand for 10 days under a relative humidity of 60% and a temperature condition of 180°C to an initial resistivity value of the conductive film, expressed as a percentage.

In another general aspect, a paste composition includes the metal nanowire having a core-shell structure described above.

In the paste composition according to an exemplary embodiment of the present invention, the paste composition may further include a binder.

In the paste composition according to an exemplary embodiment of the present invention, the binder may be an organic binder or a ceramic binder.

[Advantageous Effects]

The metal nanowire having a core-shell structure according to the present invention may effectively suppress an oxidation reaction which may occur on a core by a shell which is thinly and uniformly formed on the core vulnerable to oxidation and may have a structurally stable shape to maintain excellent oxidation stability even after secondary process processing using the metal nanowire.

[Description of Drawings]

FIG. 1 is a scanning electron micrograph synthesized in Example 1.
FIG. 2 is a scanning electron micrograph synthesized in Example 2.
FIG. 3 is a scanning electron micrograph synthesized in Example 3.
FIG. 4 is a scanning electron micrograph synthesized in Comparative Example 1.
FIG. 5 is a scanning electron micrograph synthesized in Comparative Example 2.
FIG. 6 is results of thermogravimetric analysis (TGA) of samples synthesized according to Examples 1 and 2 and Comparative Example 1.

[Best Mode]

Hereinafter, a metal nanowire having a core-shell structure of the present invention will be described in detail with reference to the accompanying drawings. The drawings to be provided below are provided by way of example so that the spirit of the present invention can be sufficiently transferred to a person skilled in the art to which the present invention pertains. Therefore, the present invention is not limited to the drawings provided below but may be embodied in many different forms, and the drawings suggested below may be exaggerated in order to clarify the spirit of the present invention. Technical terms and scientific terms used herein have the general meaning understood by those skilled in the art to which the present invention pertains unless otherwise defined, and a description for the known function and configuration which may unnecessarily obscure the gist of the present invention will be omitted in the following description and the accompanying drawings.

In addition, the singular form used in the specification and claims appended thereto may be intended to include a plural form also, unless otherwise indicated in the context.

In the present specification and the appended claims, the terms such as "comprise" or "have" mean that there is a characteristic or a constitutional element described in the specification, and as long as it is not particularly limited, a possibility of adding one or more other characteristics or constitutional elements is not excluded in advance.

The metal nanowire having a core-shell structure according to an embodiment of the present invention includes: a core containing copper and a shell containing silver on the core, wherein a ratio (D/L) between a diameter (D) of the core and a thickness (L) of the shell is 10 to 60, the thickness of the shell is 5 to 40 nm, and a peak intensity ($I_1$) of Ag $3d_{5/2}$ of silver and a peak intensity ($I_2$) of Cu $2p_{3/2}$ of copper in an X-ray photoelectron spectroscopy spectrum satisfy the following Equation 1:

$$\text{(Equation 1)}$$

$$I_2/I_1 \leq 0.2.$$

The core containing copper has a disadvantage in that its electrical properties may be deteriorated when copper is exposed to the air, and the disadvantage may be alleviated by a core-shell structure including a shell containing silver on a core containing copper as before; however, since quality uniformity of the shell coated on the core is not consistent, copper contained in the core is exposed to the outside, and there is still a possibility that a copper oxide which may deteriorate electrical properties is produced on the surface of the nanowire.

However, the metal nanowire having a core-shell structure of the present invention has the core-shell structure in which a ratio (D/L) between a diameter (D) of the core and a thickness (L) of the shell is 10 to 60, the thickness of the shell is 5 to 40 nm, and a peak intensity ($I_1$) of Ag $3d_{5/2}$ of silver and a peak intensity ($I_2$) of Cu $2p_{3/2}$ of copper in an X-ray photoelectron spectroscopy spectrum satisfy Equation 1, and thus, since the core containing copper is hardly exposed to the outside by the shell containing silver which is thinly and uniformly formed on the core containing copper, the metal nanowire may have significantly excellent oxidation stability.

In an exemplary embodiment, a ratio ($I_2/I_1$) between the peak intensity ($I_1$) of Ag $3d_{5/2}$ of silver and the peak intensity ($I_2$) of Cu $2p_{3/2}$ of copper in the X-ray photoelectron spectroscopy spectrum may be 0.2 or less, preferably 0.1 or less, more preferably 0.05 or less, and more preferably 0.03 or less, and 0.001 or more.

When the ratio ($I_2/I_1$) between the peak intensity ($I_1$) of Ag $3d_{5/2}$ of silver and the peak intensity ($I_2$) of Cu $2p_{3/2}$ of copper in the X-ray photoelectron spectroscopy spectrum is more than 0.2, copper which is exposed to the outside in the metal nanowire having a core-shell structure is stabilized to lower oxidation stability of the metal nanowire, and thus, it is preferred that the ratio ($I_2/I_1$) between the peak intensity ($I_1$) of Ag $3d_{5/2}$ of silver and the peak intensity ($I_2$) of Cu $2p_{3/2}$ of copper in the X-ray photoelectron spectroscopy spectrum satisfies the range described above.

In a specific example, the peak of Ag $3d_{5/2}$ of silver in the X-ray photoelectron spectroscopy spectrum may be made up of a peak of metallic silver ($Ag^0$).

Specifically, in the metal nanowire having a core-shell structure of the present invention, the shell containing silver which is included in the metal nanowire and positioned on the core contains unoxidized silver, that is, metallic silver (Ag), not silver oxides such as $Ag_2O$, $AgO$, and $Ag_2O_2$, and may have excellent electrical conductivity properties. As an example, the oxidation degree of silver contained in the shell may be less than 1%, advantageously less than 0.5%, and more advantageously less than 0.1% and 0.01% or more.

In a specific example of the present invention, a content of copper oxide (CuO) contained in the core may be 4 wt% or less, 2 wt% or less, 1 wt% or less, or 0.5 wt% or less and 0.01 wt% or more of the total weight of the core.

Since the copper oxide contained in the core is included in the content range described above, the core may maintain excellent electrical properties inherent to copper, and also, the metal nanowire having a core-shell structure of the present invention including the shell containing silver which is positioned on the core and has a significantly low oxidation degree may maintain electrical properties based on excellent oxidation stability.

In a specific example, in the metal nanowire, a full width half maximum (FWHM) of a (111) crystal plane of silver contained in the shell may be larger than a FWHM of a (111) crystal plane of copper contained in the core.

Herein, the full width half maximum refers to the full width half maximum of an X-ray diffraction peak, and the full width half maximum of the (111) crystal plane of silver contained in the shell being larger than the full width half maximum of the (111) crystal plane of copper contained in the core in the metal nanowire having a core-shell structure means that the crystal size of silver is smaller than the crystal size of copper. As such, silver which has a crystal size smaller than copper is positioned in a dense form on the core containing copper and wraps around the core, thereby effectively preventing copper from being exposed to the outside, and thus, the metal nanowire having a core-shell structure of the present invention has excellent oxidation stability.

The metal nanowire having a core-shell structure of the present invention having excellent oxidation stability as described above is due to the shell containing silver which is extremely thinly and uniformly positioned on the core.

As an example, the shell may have a thickness of 5 to 40 nm, specifically 5 to 30 nm, more specifically 5 to 20 nm, and still more specifically 6 to 10 nm.

When the thickness of the shell is less than 5 nm, oxidation of copper may not be effectively suppressed, and when the thickness of the shell is 40 nm or more, the uniformity of the shell positioned on the core is lowered, so that there may be a possibility of production of a copper oxide, which is not advantageous in terms of economic feasibility, and thus, it is preferred that the thickness of the shell satisfies the range described above.

As a specific example, the ratio (D/L) between the diameter (D) of the core and the thickness (L) of the shell may be 10 to 60, advantageously 15 to 50, more advantageously 20 to 50, and still more advantageously 30 to 50, and the diameter of the core may be, as an example, 100 to 400 nm, preferably 150 to 400 nm, and more preferably 200 to 400 nm.

Since the diameter of the core included in the metal nanowire having a core-shell structure of the present invention has the range described above, and the ratio (D/L) between the diameter (D) of the core and the thickness (L) of the shell has the range described above, the uniformity of the shell positioned on the core becomes excellent, and thus, a metal nanowire having a core-shell structure having strong resistance to oxidation may be provided.

In an exemplary embodiment, the metal nanowire may have a diameter of 110 to 500 nm, specifically 160 to 500 nm, and more specifically 210 to 500 nm, and may have an aspect ratio of 5 to 100, preferably 8 to 60, and more preferably 10 to 40.

In order for the metal nanowire to maintain oxidation stability, have excellent dispersibility, and have high conductivity even after a secondary processing process of preparing a composition by a method such as roll milling for forming a metal nanowire network structure and the like using the metal nanowire, it is preferred that the diameter and the aspect ratio of the metal nanowire satisfy the range described above.

Specifically, the metal nanowire is used in a network structure in which a plurality metal nanowires are in contact with each other and tangled, and for this, the metal nanowire is subjected to a secondary processing process such as preparation of a composition mixed with a binder. Herein, since electrical and/or physical properties of a finally formed metal nanowire network greatly depend on a dispersion degree at which metal nanowires are dispersed without agglomeration therebetween in the composition, it is very important to have excellent dispersibility.

In addition, in terms of oxidation stability of the metal nanowire, though resistance to oxidation of copper contained in the core is strengthened by the shell positioned on the core containing copper, the metal nanowire is cut during the secondary processing process so that the core containing copper is exposed to the outside to deteriorate oxidation stability, and thus, it is important for the metal nanowire to have a structurally stable shape so that the metal nanowire maintains excellent oxidation stability even after the secondary processing process.

As an example, the metal nanowire may have a length of 1 to 50 um, preferably 2 to 35 $\mu$m, and more preferably 3 to 20 $\mu$m.

Since the metal nanowire having a core-shell structure of the present invention has the length in the range described above, it is structurally stable and has excellent oxidation stability even in itself, and also, may maintain excellent oxidation stability even after the secondary processing process.

As an example, a composition in which the metal nanowires which may be manufactured through the secondary processing process and a binder are mixed is used to coat the metal nanowires on a substrate.

Herein, the substrate coated with the metal nanowire may be a substrate manufactured of an organic or inorganic material, and as a specific example, may be a plastic substrate, a glass substrate, or a quartz substrate, or the like. An example of the material forming the substrate described above may include methacryl resin, aromatic polyester, modified polyphenylene oxide (MPPO), cellulose ester, cellulose acetate, quartz, styrene-butadiene copolymer, silicon wafer, acrylonitrile butadiene styrene copolymer (ABS resin), epoxy resin, olefin maleimide copolymer, fused silica, glass, regenerated cellulose, triacetyl cellulose, phenol resin, polydimethylcyclohexene terephthalate, polydimethylsiloxane (PDMS), polymethyl methacrylate, polymethyl acrylate, polybutadiene, polybutylene terephthalate, polyfluorovinylidene, polyvinylidene fluoride, polyvinyl acetate, polysulfonate, polysulfone, polystyrene (PS), polysilazane, polysilane, polysiloxane, polyaramid, polyarylate, polyamide, polyarylate, polyamide, polyamideimide, polyacrylate, polyacrylonitrile (PAN), polyester, polyethersulfone (PES), polyether nitrile, polyether sulfone, polyetherimide, polyether ketone, polyethylene naphthalate (PEN), polyethylene sulfone, polyethylene (PE), polyethylene terephthalate (PET), polyethyl methacrylate, polyethyl acrylate, polyepoxide, polyvinyl chloride, polyoxyethylene, polyolefin, polyurethane, polyimide resin, polycarbosilane, polycarbonate, polyphenylene sulfide, polyphenylene ether, polypropylene (PP), AS resin, GaAs, MgO, silica, polyvinyl chloride, polydimethylcyclohedxene terephthalate, and the like, but is not limited thereto.

In an exemplary embodiment of the present invention, the metal nanowire having a core-shell structure may have an oxidation initiation temperature of 250°C or higher.

Herein, the oxidation initiation temperature of the metal nanowire and an inflection point at a specific temperature may be obtained from the results of thermogravimetric analysis (TGA).

Specifically, the oxidation initiation temperature may be defined as a temperature at an intersection point where a straight line with no change in weight initially and a tangent line at a point with a change of 1 wt% from the initial weight intersect in a graph of thermogravimetric analysis results.

In a specific example, the oxidation of the metal nanowire having a core-shell structure may initiate at 250°C or higher, specifically 280°C or higher, and more specifically 300°C or higher, and though the upper limit is not limited, the oxidation of the metal nanowire having a core-shell structure may be initiated at a temperature of 400°C or lower. Generally, oxidation of copper is initiated in a range of 160 to 180°C, and the metal nanowire having a core-shell structure of the present invention having an oxidation initiation temperature of 250°C or higher means that the core part containing copper is not exposed to the outside.

That is, in the metal nanowire having a core-shell structure, the shell containing silver is thinly and uniformly positioned on the core containing copper in the thickness range described above, so that the metal nanowire has the oxidation initiation temperature in the range described above, and thus, stably has strong resistance to oxidation.

In a specific example, in a conductive film having a thickness of 8 um including the metal nanowire described above, a resistivity change rate may be 103% or less, advantageously 102% or less, and more advantageously 101% or less, and though the lower limit is not limited thereto, may be substantially 99% or more, the resistivity change rate being a ratio of a resistivity value measured after allowing the conductive film to stand for 10 days under a relative humidity of 60% and a temperature condition of 180°C to an initial resistivity value of the conductive film, expressed as a percentage.

The resistivity change rate satisfying the range means that the shell containing silver is densely and uniformly positioned on the core containing copper, so that the initial resistivity properties are maintained even after being allowed to stand for 10 days under the harsh conditions described above.

The conductive film including the metal nanowire may be formed using a composition in which the metal nanowire which may be manufactured through a secondary processing process as described above and a binder are mixed, and it is shown that excellent oxidation stability may be maintained even after the secondary processing process.

The present invention provides a paste composition including the metal nanowire having a core-shell structure described above, as another embodiment.

In an exemplary embodiment, the paste composition may include 5 to 80 wt%, specifically 10 to 70 wt%, and more specifically 30 to 60 wt% of the metal nanowire, based on the total weight of the composition.

In an exemplary embodiment, the paste composition may further include a binder, and the binder may be included at 5 to 30 wt%, specifically 10 to 30 wt% of the total weight of the paste composition.

In a specific example, the binder may be an organic binder or a ceramic binder, the organic binder may be, specifically, one or more selected from organic resins such as epoxy-based resin, acryl resin, silicone resin, urethane resin, fluorine rubber, nitrile rubber, ethyl cellulose, ethylhydroxyethyl cellulose, and nitrocellulose, and the epoxy-based resin may be any one or two or more epoxy resins selected from bisphenol A-type epoxy resin, bisphenol F-type epoxy resin, bisphenol S-type epoxy resin, phenol novolac type epoxy resin, cresol novolac type epoxy resin, alkylphenol novolac type epoxy resin, biphenyl type epoxy resin, naphthalene type epoxy resin, dicyclopentadiene type epoxy resin, triglycidyl isocyanate, urethane modified epoxy resin, and epoxy resin, and the like, but is not limited thereto.

The ceramic binder is a polymer having a polysiloxane main chain in which a silicon (Si) atom and an oxygen (O) atom alternate, and generally, silicone has a structure in which usually two organic atom groups of alkyl such as methyl, ethyl, and propyl or phenyl ($-C_6H_5$) are bonded to each silicon atom. The ceramic binder included in the paste composition according to the present invention may have hydrogen, a hydroxyl group, a methyl group, or a phenyl group which is bonded thereto, and as an example, may be a polydimethylsiloxane-based resin including a dimethylsiloxane repeating unit, and may be a polysiloxane-based resin further including a methylphenylsiloxane repeating unit, an ethylphenylsiloxane repeating unit, or a diphenylsiloxane repeating unit.

As a specific example, the paste composition may further include 5 to 30 wt% of a solvent based on the total weight of the composition, but is not limited thereto.

In a specific example, the solvent may be any one or two or more selected from acetone, methyl ethyl ketone, methyl alcohol, ethyl alcohol, isopropyl alcohol, butyl alcohol, ethylene glycol, polyethylene glycol, tetrahydrofuran, dimethylformamide, dimethylacetamide, N-methyl-2-pyrrolidone, hexane, cyclohexanone, toluene, chloroform, dichlorobenzene, dimethylbenzene, trimethylbenzene, pyridine, methylnaphthalene, nitromethane, acrylonitrile, octadecylamine, butyl carbitol acetate, aniline, dimethylsulfoxide, diethylene glycol ethyl ether, and terpineol.

The present invention provides a method of manufacturing the metal nanowire having a core-shell structure described above, as another embodiment.

The method of manufacturing a metal nanowire having a core-shell structure according to the present invention includes: a) manufacturing a copper nanowire; b) adding an oxidation film removal solution to a water dispersion in which the manufactured copper nanowire is dispersed in water to remove an oxidation film; c) adding the first reducing agent to the solution of step b), and then forming a first silver coating layer while dropping a first silver nitrate solution; d) after adding a second reducing agent, forming a second silver coating layer while dropping a second silver nitrate-ammonia complex solution; and e) washing and drying a silver-coated copper nanowire manufactured in step f).

In the metal nanowire having a core-shell structure manufactured according to the manufacturing method of the present invention, a copper nanowire is first manufactured, the oxide film formed on the surface of the copper nanowire is removed using the oxidation film removal solution, and then the first silver nitrate solution and the second silver nitrate-ammonia complex solution are sequentially dropped to form the silver coating layer on the copper nanowire, and thus, the shell containing silver which is extremely thinly, uniformly, and densely formed as compared with a conventional metal nanowire may be formed on the core containing copper.

In an exemplary embodiment, the silver coating layer formed on the copper nanowire may be sequentially formed over twice, and may be sequentially formed over 3 times, 4 times, 5 times, 6 times, or 7 times, of course. However, considering manufacturing process efficiency and economical aspects, it is preferred to sequentially form the silver coating layer over twice on the copper nanowire.

Specifically, the first silver coating layer may be formed while dropping the first silver nitrate solution into a solution including the copper nanowire, and then the second silver coating layer may be formed while dropping the second silver nitrate-ammonia complex solution into a solution including the copper nanowire on which the first silver coating layer is formed. Herein, the silver-ammonia complex solution may be a mixed solution of a silver nitrate solution and ammonia water.

More specifically, the second silver coating layer may be formed by a second silver nitrate-ammonia complex solution including a silver-ammonia complex, and an Ag ion included in the silver-ammonia complex is reduced by electrons coming from copper of the copper nanowire to coat a silver atom on the copper nanowire.

Herein, the silver-ammonia complex included in the second silver nitrate-ammonia complex solution may be formed according to the following Reaction Formula 1:

(Reaction Formula 1)

1) $\quad 2AgNO_3 + 2NH_4OH \rightarrow Ag_2O\downarrow + H_2O + 2NH_4NO_3$

2) $\quad Ag_2O + 4NH_4OH \rightarrow 2[Ag(NH_3)_2]OH + 3H_2O$

3) $\quad [Ag(NH_3)_2]OH + NH_4NO_3 \rightarrow [Ag(NH3)_2]NO_3 + NH_4OH$

$[Ag(NH_3)_2]^+$ formed in 3) of Reaction Formula 1 is the silver-ammonia complex. As described above, the reaction in which the Ag ion included in the silver-ammonia complex is reduced may be represented by the following Reaction Formula 2:

(Reaction Formula 2) $\qquad Cu + 2[Ag(NH_3)_2]NO_3 \rightarrow [Cu(NH_3)_4](NO_3)_2 + 2Ag\downarrow$

As described above, the silver coating layer may be formed on the copper nanowire using the second silver nitrate-ammonia complex solution to suppress an oxidation reaction on the surface of the copper nanowire, but there is a limitation in densely and uniformly forming the silver coating layer.

Specifically, when the silver coating layer is formed on the copper nanowire using the second silver nitrate-ammonia complex solution, the silver coating layer is formed by performing silver nucleation and growth of the produced nuclei simultaneously, and thus, there is a limitation in improving uniformity and denseness of the coating layer.

Thus, in order to improve the oxidation stability of the silver-coated copper nanowire, an unnecessarily thick silver coating layer is formed, or through the thick silver coating layer is formed, oxidation stability is locally lowered in some silver coating layer areas which are not dense.

However, in the metal nanowire according to the present invention, since the second silver coating layer is formed while dropping the second silver nitrate-ammonia complex solution into the solution including the copper nanowire on which the first silver coating layer is formed, the silver coating layer which is finally formed on the copper nanowire is extremely thin, but uniformly and densely formed as compared with the conventional nanowire, and thus, the oxidation stability of the metal nanowire may be significantly improved.

As described above, in order to form the second silver coating layer on the copper nanowire on which the first silver coating layer is formed, copper needs to be partly exposed for a reaction with a silver-ammonia complex on the surface of the copper nanowire on which the first silver coating layer is formed.

Specifically, the first silver coating layer may be a coating layer in which a large amount of silver nuclei are uniformly produced, but nuclear growth is suppressed to expose copper on the surface of the copper nanowire, and when the second silver nitrate-ammonia complex solution is dropped into the solution including the copper nanowire on which the first silver coating layer is formed for forming the second silver coating layer, nuclear growth dominates, so that the denseness and uniformity of the finally formed silver coating layer may be significantly improved.

In an exemplary embodiment, the first silver coating layer may be formed by adding a first reducing agent to a water dispersion in which the copper nanowire from which the oxidation film has been removed is dispersed in water, and then dropping the first silver nitrate solution.

In a specific example, the concentration of the first silver nitrate solution may be 0.01 to 1 M, specifically 0.01 to 0.8 M, more specifically 0.01 to 0.2 M, and still more specifically 0.03 to 0.1 M.

The first silver coating layer which is first formed on the core containing copper may be formed by the first silver nitrate solution, and when the concentration of the first silver nitrate solution is lower than 0.01 M, the silver coating layer may not be formed, and when the concentration is higher than 1.0 M, the silver coating layer is formed thick and non-uniform, and thus, the second silver coating layer is not formed well and a dense and uniform silver coating layer may not be formed. Thus, it is advantageous that the concentration of the first silver nitrate solution satisfies the above range.

In a specific example, the dropping of the first silver nitrate solution may be characterized by adding the first reducing agent to the water dispersion in which the copper nanowires from which the oxidation film has been removed are dispersed in water, and then injecting the first silver nitrate solution at 0.1 to 500 ml, advantageously 0.5 to 100 ml per minute while stirring the water dispersion at 500 to 10,000 rpm, specifically 5,000 to 10,000 rpm.

When the injection rate of the first silver nitrate solution is less than 0.1 ml/min, the amount of reduced silver is small, so that the silver coating layer is not formed, and when the injection rate is more than 500 ml/min, silver is not coated on the copper nanowires and free silver particles may be formed in the solution, and thus, it is advantageous that the first silver nitrate solution is injected at the injection rate described above.

Herein, in order to uniformly and densely form the finally formed silver coating layer through formation of the second silver coating layer which is subsequently performed, the first silver nitrate solution may be injected for 1 to 30 minutes, specifically 10 to 20 minutes.

In addition, when the stirring speed of the water dispersion is less than 500 rpm, the silver coating may not be formed well on the surface of the copper nanowire, and when the stirring speed is more than 10,000 rpm, a force more than a shear strength of the copper nanowire dispersed in the water dispersion is applied to cause shear destruction, which shortens the length, and thus, it is preferred that the stirring speed satisfies the range described above.

In an exemplary embodiment, the first reducing agent added for forming the first silver coating layer may be any reducing agent which may perform silver coating by reducing silver ions, without limitation, and as an example, the first reducing may be one or two or more selected from the group consisting of oxalic acid, malonic acid, succinic acid, glutaric acid, adipic acid, pimelic acid, suberic acid, azelaic acid, sebacic acid, brasilic acid, dodecanoic acid, thapsic acid, maleic acid, fumaric acid, gluconic acid, traumatic acid, muconic acid, glutinic acid, citraconic acid, mesaconic acid, aspartic acid, glutamic acid, diaminopimelic acid, tartronic acid, arabinaric acid, saccharic acid, mesosalic acid, oxaloacetic acid, acetonidicarboxylic acid, phthalic acid, isophthalic acid, terephthalic acid, diphenic acid, tartaric acid, sodium potassium tartrate, ascorbic acid, hydroquinone, glucose, and hydrazine.

In a specific example, the concentration of the first reducing agent may be 0.001 to 3 M, specifically 0.005 to 2 M, and more specifically 0.005 to 1 M.

When the concentration of the first reducing agent is less than 0.001 M, a reduction reaction is decreased, so that the silver coating layer may not be formed, and when the concentration is more than 3 M, a reagent consumption amount is increased to increase economical and/or environmental loss, which is not efficient, and thus, it is preferred that the concentration of the first reducing agent satisfies the range described above.

As a specific example, the copper nanowire on which the first silver coating layer is formed may be a copper nanowire from which an oxidation film has been removed.

The copper nanowire may be easily oxidized after manufacture to form an oxidation film (copper oxide) on the surface, and the oxidation film may lower the electrical conductivity of the copper nanowire and prevent a contact with silver coated on the surface. Therefore, it is preferred to remove the oxidation film formed on the surface of the copper, before forming the silver coating layer.

As an exemplary embodiment, an oxide film may be removed by adding the oxide film removal solution to the water dispersion in which the copper nanowire is dispersed in water.

The oxide film removal solution may be a mixed solution of ammonia water and ammonium sulfate, in which the concentration of the mixed solution of ammonia water and ammonium sulfate may be 0.001 M to 0.3 M, specifically 0.001 to 0.1 M, and when the concentration of the mixed solution of ammonia water and ammonium sulfate is less than 0.001 M, the oxide film is not removed well, so that the silver coating layer is not formed, or the electrical conductivity of the copper nanowire may be lowered, and when the concentration is more than 0.3 M, the copper nanowire may be decomposed, so that a copper consumption is increased to decrease an overall yield, and thus, it is preferred that the concentration of the oxide film removal solution satisfies the range described above.

In addition, the oxide film removal solution may be replaced with a material including amine such as a disodium ethylenediaminetetraacetate salt in addition to the solution containing an ammonia ion, and may further include other amine-based materials or additives, but is not limited thereto.

As an advantageous example, it is preferred to perform the removal of the oxide film using the oxide film removal solution for 1 to 60 minutes, specifically 1 to 30 minutes, and more specifically 1 to 20 minutes. When the reaction time is less than 1 minute, the oxide film is not removed, and when the reaction time is more than 60 minutes, the copper nanowire may be dissolved.

In an exemplary embodiment, the first silver coating layer is formed on the copper nanowire, the second reducing agent is added, and then the second silver coating layer may be formed while dropping the second silver nitrate-ammonia complex solution.

Herein, the concentration of the second silver nitrate-ammonia complex solution may be thinner than the concentration of the first silver nitrate solution.

The second silver nitrate-ammonia complex solution is a mixed solution of silver nitrate solution and ammonia water, as described above, and the concentration of the second silver nitrate-ammonia complex solution being thinner than the concentration of the first silver nitrate solution means that the concentration of the silver nitrate solution included in the second silver nitrate-ammonia complex solution is lower than the concentration of the first silver nitrate solution.

As such, in forming the coating layer on the copper nanowire, since the coating layer is formed over twice using the second silver nitrate-ammonia complex solution including the first silver nitrate solution and the silver nitrate solution of which the concentration is thinner than the concentration of the first silver nitrate solution, the silver coating layer which is thin, uniform, and dense as compared with the conventional nanowire may be formed on the copper nanowire.

As an exemplary embodiment, a concentration ratio of the first silver nitrate solution: the silver nitrate solution included in the second silver nitrate-ammonia complex solution may be 1: 0.01 to 0.9, specifically 1: 0.05 to 0.8, and more specifically 1: 0.1 to 0.6.

As described above, since the concentration ratio of the first silver nitrate solution: the silver nitrate solution included in second silver nitrate-ammonia complex solution satisfies the above range, a thinner, more uniform, and denser silver coating layer than that of the conventional copper nanowire is formed on the copper nanowire, thereby significantly improving the oxidation stability of the silver-coated copper nanowire.

As a specific example, the concentration of the silver nitrate solution included in the second silver nitrate-ammonia complex solution may be 0.005 to 0.5 M, specifically 0.01 to 0.1 M, and more specifically 0.01 to 0.05 M.

In order to form a denser and more uniform silver coating layer while maintaining the thickness of the silver coating layer which is first formed at a small thickness on the core containing copper, it is preferred that the concentration of the silver nitrate solution included in the second silver nitrate-ammonia complex solution satisfies the range described above.

In a specific example, the concentration of ammonia water included in the second silver nitrate-ammonia complex solution may be freely adjusted when the shell layer containing silver may be formed on the core containing copper by forming the silver-ammonia complex, and as an example, it may be 0.01 to 0.3 M, specifically 0.01 to 0.1 M.

In a specific example, the dropping of the second silver nitrate-ammonia complex solution may be performed in the same manner as in the dropping conditions of the first silver nitrate solution described above, except for the injection time conditions of the second silver nitrate-ammonia complex solution.

Specifically, the injection of the second silver nitrate-ammonia complex solution may be performed for 30 to 120 minutes, advantageously 50 to 80 minutes.

In order to densely and uniformly form the silver coating layer which is finally formed using the second silver nitrate-ammonia complex solution having a thinner concentration than the concentration of the first silver nitrate solution, it is preferred to form the second silver coating layer by injecting the second silver nitrate-ammonia complex solution during the above-described time.

A second reducing agent added for forming the second silver coating layer is the same as or similar to the first reducing agent described above, and thus, the detailed description thereof will be omitted.

However, in terms of uniformly and densely forming a silver coat during the formation of the second silver coating layer, it is preferred to use a weak reducing agent, and as a preferred example, the second reducing agent may be sodium potassium tartrate.

In a specific example, the concentration of the second reducing agent may be 0.001 to 3 M, specifically 0.005 to 2 M, and more specifically 0.005 to 1 M.

As a specific example, the silver coating layer including the first silver coating layer and the second silver coating layer, formed on the copper nanowire may have a thickness of 5 to 40 nm, specifically 5 to 30 nm, more specifically 5 to 20 nm, and more specifically 6 to 10 nm.

In an exemplary embodiment, after forming the first silver coating layer is formed by dropping the first silver nitrate solution into the water dispersion in which the copper nanowire is dispersed, a step of removing a copper ion included in the solution may be further included. Herein, the copper ion may be removed using the same solution as the oxide film removal solution described above.

As described above, the first silver coating layer may be formed by dropping the first silver nitrate solution into the water dispersion in which the copper nanowire from which the oxide film has been removed is dispersed in water, in which the copper ion may be included in the water dispersion.

The purity of the silver coating layer which is manufactured by removing the copper ion, after dropping the first silver nitrate solution to form the first silver coating layer, to form the first silver coating layer, subsequently adding the second reducing agent, and forming the second silver coating layer while dropping the second silver nitrate-ammonia complex solution may be significantly improved.

In a specific example, the copper nanowire corresponding to the core of the metal nanowire in the metal nanowire having a core-shell structure may be manufactured by adding a third reducing agent to an aqueous solution including a copper compound and then reducing the copper ion.

Specifically, the copper nanowire may be manufactured by adding any one or more third reducing agents selected from hydrazine, ascorbic acid, L(+)-ascorbic acid, isoascorbic acid, ascorbic acid derivatives, oxalic acid, formic acid, phosphite, phosphoric acid, sulfite, or sodium borohydride to an aqueous solution including a copper compound prepared by adding an alkali, a copper compound, and a capping agent to water and performing stirring, and reducing the copper ion.

Herein, the capping agent is bonded to a copper nanostructure in which the copper ion included in the copper compound is reduced, and serves to allow copper to grow vertically to have a nanowire form. The capping agent may be piperazine ($C_4H_{10}N_2$) and/or hexamethylenediamine ($C_6H_{16}N_2$), and a method of manufacturing copper nanowire in detail may refer to Korean Patent Registration No. 10-1789213 of the present applicant.

In an exemplary embodiment, a step of separating the manufactured copper nanowire from the aqueous solution and performing washing and drying may be included.

Washing and drying may be performed using a material which may remove impurities, which may be formed during the manufacture of the copper nanowire, on the surface of the copper nanowire, and preferably, washing may be performed using distilled water and an ethanol solution. When washing the copper nanowire, it is preferred that impurities on the surface of the copper nanowire are washed with distilled water several times, washed using ethanol for rapid drying 1 or 2 times, and dried in a vacuum oven at room temperature (20 to 28°C) for 12 to 30 hours, but is not limited thereto.

As an exemplary embodiment, a residual aqueous solution separated from the copper nanowire may be recycled to manufacture the copper nanowire.

Specifically, significant amounts of copper precursor and reducing agent remain in the residual aqueous solution separated for washing and drying of the copper nanowire, after obtaining the copper nanowire. Thus, the copper compound and the third reducing agent may be further added to the residual aqueous solution to resynthesize the copper nanowire.

In general, since the alkali solution used for the manufacture of the copper nanowire is added at a high concentration, when the alkali solution is discarded as it is, purchasing costs and treatment costs of new alkali solution are consumed, which is not economical. Therefore, when the copper compound and the third reducing agent are further supplied to the residual aqueous solution separated from the copper nanowire and reacted, manufacturing costs may be significantly reduced.

Herein, the number of recycles of the residual aqueous solution may be 1 to 30, preferably 4 to 20, and more preferably 6 to 15. It is preferred that the residual aqueous solution is recycled in the range described above, in terms of manufacturing the copper nanowire which is manufactured by further supplying the copper compound and the third reducing agent to the residual aqueous solution, in a uniform nanowire form.

In an exemplary embodiment of the present invention, the metal nanowire, having a core-shell structure which is a silver-coated copper nanowire including the first silver coating layer and the second silver coating layer, manufactured by the method described above, may be obtained through the washing and drying steps, and the washing and drying may be performed in the same manner as the washing and drying of the copper nanowire described above.

As an exemplary embodiment, in the finally obtained metal nanowire having a core-shell structure, a ratio (D/L) between a diameter (D) of the core and a thickness (L) of the shell may be 10 to 60, the thickness of the shell may be 5 to 40 nm, and a peak intensity ($I_1$) of Ag $3d_{5/2}$ of silver and a peak intensity ($I_2$) of Cu $2p_{3/2}$ of copper in an X-ray photoelectron spectroscopy spectrum may satisfy the following Equation 1:

(Equation 1)

$$I_2/I_1 \leq 0.2$$

Herein, the core refers to a copper nanowire, and the shell refers to the silver coating layer including the first silver coating layer and the second silver coating layer.

In the present invention, when the metal nanowire having a core-shell structure is manufactured, the manufacturing method may be a batch reaction, a plug flow reaction, or a continuous stirring tank type reaction process, but is not limited thereto.

Hereinafter, the metal nanowire having a core-shell structure according to the present invention will be described in more detail by the examples. However, the following examples are only a reference for describing the present invention in detail, and the present invention is not limited thereto and may be implemented in various forms.

In addition, unless otherwise defined, all technical terms and scientific terms have the same meanings as those commonly understood by a person skilled in the art to which the present invention pertains. The terms used herein are only for effectively describing a certain exemplary embodiment, and not intended to limit the present invention.

(Manufacturing Example) Manufacture of copper nanowire

2000 ml of water (ultrapure water) was added to a 3000 ml round flask, a stirrer was mounted on the flask, and 1200 g (15 M) of sodium hydroxide (NaOH, Samchun Pure Chemical Co., Ltd.) was added with stirring. The reactor was cooled so that the temperature in the reactor which was heated by an exothermic reaction was not higher than 50°C, and 3.8 g (0.0079 M) of copper nitrate (II) ($Cu(NO_3)_2 3H_2O$, Samchun Pure Chemical Co., Ltd.) was dissolved in 100 ml of water (ultrapure water) and added to the reactor. Thereafter, 9.7 g (0.268 M) of piperazine ($C_4H_{10}N_2$, Sigma Aldrich) was dissolved in 100 ml of water (ultrapure water), which was added, and stirring was performed at an average stirring speed of 300 rpm for 10 minutes. After heating the reactor to 70°C, 4 ml of hydrazine ($N_2H_4$, Samchun Pure Chemical Co., Ltd.) was mixed with 240 ml (0.04 M) water (ultrapure water), and a syringe pump inside the reactor was used to add the mixture at a rate of 4 ml/min for 1 hour. The reactor was maintained at 70°C, and when the reaction was finished, the temperature was slowly cooled to room temperature, 2 L of a washing liquid of 1 vol% hydrazine was used to perform washing, and drying was performed in a vacuum oven (JEIO Tech, OV-12) at 25°C for 24 hours.

It was confirmed that the copper nanowire obtained after drying had a length of 2 to 10 um and a diameter of 100 to 500 nm.

(Example 1)

1200 ml of water (ultrapure water) and 15.0 g of the copper nanowires manufactured by the above manufacturing example were added to a 5 L flask, and stirring was performed at 10,000 rpm using a homomixer (K-Corporation, Primix). In order to remove an oxide film of the copper nanowires, 22.5 g of ethylenediaminetetracetic acid disodium salt (EDTA-2Na dihydrate, Samchun Pure Chemical Co., Ltd.) was dissolved in 150 ml of water (ultrapure water) and added to the flask, and stirring was performed at 10,000 rpm for 3 minutes. 13.1 g of L-ascorbic acid ($C_6H_8O_6$, Samchun Pure Chemical Co., Ltd.) as a reducing agent was dissolved in 150 ml of water (ultrapure water) and added thereto, and stirring was performed again for 3 minutes.

In order to perform first silver coating on the copper nanowire from which the oxide film had been removed, 150 ml of water (ultrapure water) and 1.67 g of silver nitrate ($AgNO_3$, Juntek) were mixed to prepare a first silver nitrate solution, and a peristaltic pump (Leadfluid, BT100L) was used to add the solution at a rate of 10 ml per minute for about 15 minutes to perform a reaction.

Thereafter, a sample after the first silver coating was washed with 2 L of water (ultrapure water) and dried to obtain a copper nanowire sample having a first silver coating.

Subsequently, in order to perform second silver coating, the sample after the first silver coating and 1200 ml of water (ultrapure water) were added to a 5 L flask, and a homomixer (K-Corporation, Primix) was used to perform stirring at 10,000 rpm. In order to stably remove a copper ion, 22.5 g of ethylenediaminetetracetic acid disodium salt (EDTA-2Na dihydrate, Samchun Pure Chemical Co., Ltd.) was dissolved in 150 ml of water (ultrapure water) and added to the flask, and stirring was performed at 10,000 rpm for 3 minutes.

21 g of sodium potassium tartrate tetrahydrate ($KNaC_4H_4O_6 \cdot 4H_2O$) as a reducing agent was dissolved in 150 ml of water (ultrapure water) and added to the flask, and stirring was performed again for 3 minutes. In order to perform second silver coating, 655 ml of water (ultrapure water) was added to 4.23 g of silver nitrate to prepare a silver nitrate solution, and 4.34 ml of ammonia water ($NH_4OH$, Samchun Pure Chemical Co., Ltd.) was added thereto to prepare a second silver nitrate-ammonia complex solution. The thus-prepared second silver-ammonia complex solution was added at a rate of 10 ml per minute for about 66 minutes to perform a reaction.

After the reaction was completed, the metal nanowires separated using a filter paper were washed with 2 L of water (ultrapure water) and dried at room temperature for 24 hours to obtain copper nanowires which were thinly and uniformly coated with silver.

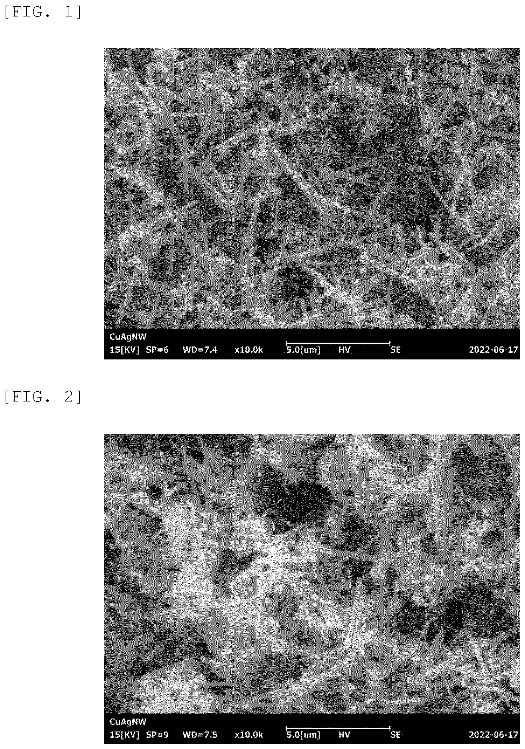

The thus-obtained silver-coated copper nanowires were measured using a scanning electron microscope (COXEM, EM-30AXN), the results are shown in FIG. 1, and in the results of analyzing the length and the thickness of the silver-coated copper nanowires, the length was measured as 2.1 to 6.3 um and the thickness was measured as 191 to 450 nm.

(Example 2)

The process was performed in the same manner as in Example 1, except that a first silver nitrate solution prepared by mixing 150 ml of water (ultrapure water) and 2.95 g of silver nitrate (AgNOs, Juntek) for silver coating on the copper nanowire from which the oxidation film had been removed, and a second silver-ammonia complex solution obtained by adding 655 ml of water (ultrapure water) to 2.95 g of a silver nitrate to prepare a silver nitrate solution and adding 4.34 ml of ammonia water ($NH_4OH$, Samchun Pure Chemical Co., Ltd.) for second silver coating were used.

The thus-obtained silver-coated copper nanowires were measured using a scanning electron microscope, the results are shown in FIG. 2, and in the results of analyzing the length and the thickness of the silver-coated copper nanowires, the length was measured as 2.0 to 4.1 um and the thickness was measured as 299 to 412 nm.

(Example 3)

The process was performed in the same manner as in Example 1, except that a first silver nitrate solution prepared by mixing 150 ml of water (ultrapure water) and 4.23 g of silver nitrate (AgNOs, Juntek) for silver coating on the copper nanowire from which the oxidation film had been removed, and a second silver-ammonia complex solution obtained by adding 655 ml of water (ultrapure water) to 1.67 g of a silver nitrate to prepare a silver nitrate solution and adding 4.34 ml of ammonia water ($NH_4OH$, Samchun Pure Chemical Co., Ltd.) for second silver coating, were used.

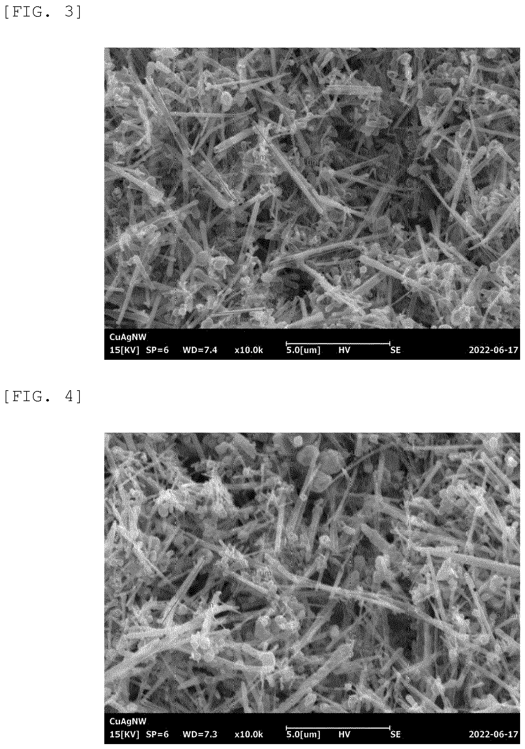

The thus-obtained silver-coated copper nanowires were measured using a scanning electron microscope, the results are shown in FIG. 3, and in the results of analyzing the length and the thickness of the silver-coated copper nanowires, the length was measured as 2.1 to 6.3 um and the thickness was measured as 191 to 450 nm.

(Comparative Example 1)

The process was performed in the same manner as in Example 1, except that the first silver coating reaction was not performed, and only the second silver-ammonia complex solution obtained by adding 655 ml of water (ultrapure water) to 5.90 g of silver nitrate to prepare a silver nitrate solution and adding 4.34 ml of ammonia water ($NH_4OH$, Samchun Pure Chemical Co., Ltd.) for second silver coating was used to form a silver coating layer on the copper nanowires.

The thus-obtained silver-coated copper nanowire was measured using a scanning electron microscope (COXEM, EM-30AXN), the results are shown in FIG. 4, and in the results of analyzing the length and the thickness of the silver-coated copper nanowires, the length was measured as 1.3 to 5.4 um and the thickness was measured as 214 to 478 nm.

(Comparative Example 2)

The process was performed in the same manner as in Example 1, except that the first silver coating reaction was not performed, and only the second silver-ammonia complex solution obtained by adding 655 ml of water (ultrapure water) to 5.90 g of silver nitrate to prepare a silver nitrate solution and adding 4.34 ml of ammonia water ($NH_4OH$, Samchun Pure Chemical Co., Ltd.) for second silver coating was used to form a silver coating layer on the copper nanowires, but the reaction was performed by adding at a rate of 20 ml per minute for about 33 minutes.

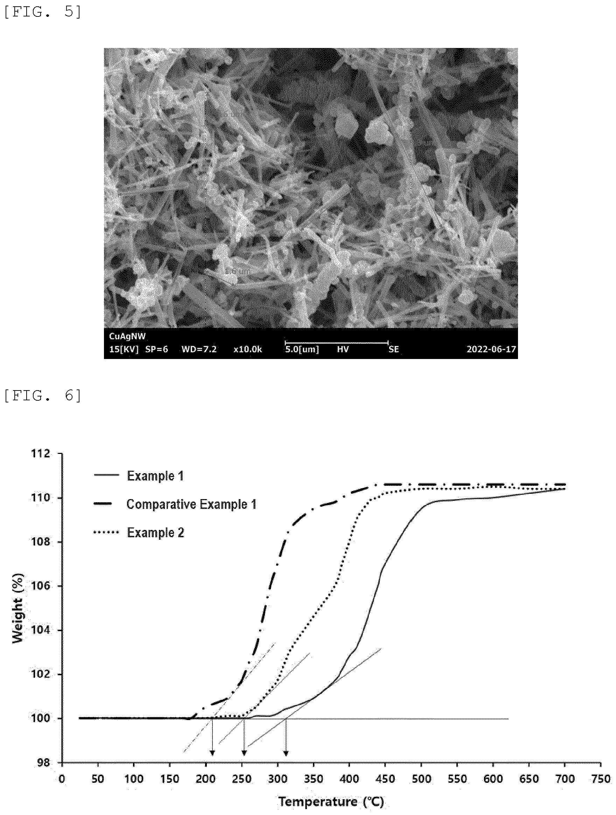

The thus-obtained silver-coated copper nanowires were measured using a scanning electron microscope (COXEM, EM-30AXN), the results are shown in FIG. 5, and in the results of analyzing the length and the thickness of the silver-coated copper nanowires, the length was measured as 1.6 to 8.3 um and the thickness was measured as 131 to 787 nm.

(Comparative Example 3)

The process was performed in the same manner as in Comparative Example 1, except that the first silver coating reaction was not performed, and only the second silver-ammonia complex solution obtained by adding 655 ml of water (ultrapure water) to 12.2g of silver nitrate to prepare a silver nitrate solution and adding 4.34 ml of ammonia water ($NH_4OH$, Samchun Pure Chemical Co., Ltd.) for second silver coating was used to form a silver coating layer on the copper nanowires.

(Experimental Example 1) Structure and surface analysis of silver-coated copper nanowire

For each of the silver-coated copper nanowires having a core-shell structure, the diameter of the core and the thickness of the silver coating layer formed on the copper nanowires were measured using an ion beam scanning electron microscope (Focused Ion Beam Scanning Electron Microscope, LYRA3 XMU, TESCAN), the surface of the silver-coated copper nanowires was analyzed by an X-ray photoelectron spectroscopy (XPS, Thermo VG Scientific, Sigma Probe), and the results are summarized in Table 1.

At this time, the peak intensity ($I_1$) of Ag $3d_{5/2}$ and the peak intensity ($I_2$) of Cu $2p_{3/2}$ calculated from the XPS spectrum of each of the silver-coated copper nanowires were compared to determine the uniformity of the silver coating layer formed on the copper nanowires.

[Table 1]

| | Cu core diameter (D) (nm) | Ag coating layer thickness (L) (nm) | D/L | XPS ($I_2/I_1$) |
|---|---|---|---|---|
| Example 1 | 350 | 8.2 | 42.7 | 0.029 |
| Example 2 | 312 | 12.1 | 25.8 | 0.11 |
| Example 3 | 321 | 14.6 | 22.0 | 0.17 |
| Comparative Example 1 | 368 | 16.8 | 21.9 | 0.28 |
| Comparative Example 2 | 398 | 17.8 | 22.4 | 0.30 |
| Comparative Example 3 | 302 | 31.2 | 9.7 | 0.41 |

Referring to the results of analyzing the X-ray photoelectron spectroscopy spectrum of Table 1, in Examples 1 to 3, a ratio between the peak intensity ($I_1$) of Ag $3d_{5/2}$ of silver and the peak intensity ($I_2$) of Cu $2p_{3/2}$ of copper was confirmed to be 0.2 or less, while in Comparative Examples 1 to 3, the value was confirmed to be more than 0.2, and it is shown therefrom that silver was not evenly coated on the surface of the metal nanowires of Comparative Examples 1 to 3 and copper was exposed to the outside.

However, in Examples 1 to 3, it is shown that a thin silver coating layer of less than 15 nm was uniformly and densely formed on the copper core, and it is found therefrom that the exposure of the copper core to the outside was effectively suppressed to have excellent oxidation stability.

In addition, in Example 1 in which the concentration ratio of the first silver nitrate solution: the silver nitrate solution included in the second silver nitrate-ammonia complex solution was 1: 0.58, it is shown that a thin silver coating having a thickness of 8.2 nm was formed, and the observed $I_2/I_1$ value was 0.029 which was significantly low, and it is found therefrom that silver was more densely and uniformly coated on the surface of the copper nanowires in Example 1.

In addition, in the X-ray photoelectron spectroscopy spectrum of Examples 1 to 3, it was observed that the peak of Ag $3d_{5/2}$ was made up of a peak of metallic silver ($Ag^0$) and silver coated on the core also had an extremely low oxidation degree.

Additionally, it was confirmed that the content of the copper oxide contained in the copper nanowire, which was the core in the metal nanowires of Examples 1 to 3, was 0.4 wt%.

(Experimental Example 2) Thermogravimetric analysis of silver-coated copper nanowire

Thermogravimetric analysis (TGA, Labsys EVO) was performed on the metal nanowires of Examples 1 and 2 and Comparative Example 1, and the results are shown in FIG. 6.

At this time, thermogravimetric analysis was performed in the air atmosphere, and as a result of each of the thermogravimetric analysis, the oxidation initiation temperature was defined as a temperature at an intersection point where a straight line with no change in weight initially and a tangent line at a point with a change of 1 wt% from the initial weight intersect in the graph, and the oxidation stability of each of the metal nanowires was compared.

Referring to FIG. 6, the oxidation initiation temperatures of Examples 1 and 2 were 312°C and 253°C, respectively, which were observed as having very excellent oxidation stability, while in Comparative Example 1, it was observed that oxidation initiated at 210°C, and it was found therefrom that Examples 1 and 2 had better oxidation stability than Comparative Example 1.

(Experimental Example 3) Evaluation of durability of silver-coated copper nanowire

In order to determine the durability of each of the manufactured metal nanowires, each of the metal nanowires manufactured in Examples 1 to 3 and Comparative Examples 1 to 3 was mixed with an epoxy resin (SE-55F, Shin-A T&C), a 3-roll mill (EXAKT 50) was used to prepare a composition, a bar coater (ERICHSEN, Model-510) was used to coat a polyimide film having a size of 10 um x 10 um at a thickness of 8 um, and a heat treatment was performed at 200°C for 40 minutes to form a coating layer.

At this time, the composition was prepared so that 50 wt% of the metal nanowires were included based on the total weight of the composition.

Thereafter, initial resistivity was measured for each coating layer, each coating layer was allowed to stand for 10 days under a relative humidity of 60% and a temperature condition of 180°C, the resistivity was measured again to determine the resistivity change rate, the durability was evaluated from the resistivity change rate, and the results are summarized in Table 2.

At this time, the resistivity change rate was represented by a ratio ($R/R_0$) of the resistivity value (R) measured after being allowed to stand for 10 days under the relative humidity and temperature conditions to the initial resistivity value ($R_0$), expressed as a percentage (%).

[Table 2]

|  | Resistivity change rate (%) |
|---|---|
| Example 1 | 100.1 |
| Example 2 | 101.3 |
| Example 3 | 101.2 |
| Comparative Example 1 | 104.7 |
| Comparative Example 2 | 105.1 |
| Comparative Example 3 | 104.8 |

Referring to Table 2, it is shown that the resistivity values of Examples 1 to 3 were maintained similar to the initial resistivity values even though the copper nanowires were allowed to stand for 10 days under high temperature and humidity conditions, and in particular, in Example 1, it was confirmed that though a thin silver coating layer having a thickness of 8.2 nm was formed on the copper nanowires, silver was more densely and uniformly on the surface of the copper nanowires, and thus, the resistivity value was maintained the same as the initial resistivity value.

However, in Comparative Examples 1 to 3, it was observed that copper was oxidized under high temperature and humidity conditions and the resistivity value was increased as compared with the initial resistivity.

Hereinabove, although the present invention has been described by the specific matters and specific exemplary embodiments, they have been provided only for assisting in the entire understanding of the present invention. Therefore, the present invention is not limited to the exemplary embodiments, and various modifications and changes may be made by those skilled in the art to which the present invention pertains from this description.

Therefore, the spirit of the present invention should not be limited to the above-described exemplary embodiments, and the following claims as well as all modifications equal or equivalent to the claims are intended to fall within the scope and spirit of the invention.

**Claims**

1. A metal nanowire having a core-shell structure comprising: a core containing copper and a shell containing silver on the core,
   wherein a ratio (D/L) between a diameter (D) of the core and a thickness (L) of the shell is 10 to 60, the thickness of the shell is 5 to 40 nm, and a peak intensity ($I_1$) of Ag $3d_{5/2}$ of silver and a peak intensity ($I_2$) of Cu $2p_{3/2}$ of copper in an X-ray photoelectron spectroscopy spectrum satisfy the following Equation 1:

(Equation 1)

$$I_2/I_1 \leq 0.2$$

2. The metal nanowire having a core-shell structure of claim 1, wherein the metal nanowire has a diameter of 110 to 500 nm and an aspect ratio of 5 to 100.

3. The metal nanowire having a core-shell structure of claim 2, wherein the core of the metal nanowire has a diameter of 100 to 400 nm.

4. The metal nanowire having a core-shell structure of claim 1, wherein the peak of Ag $3d_{5/2}$ of silver is made up of a peak of metallic silver (Ag°).

5. The metal nanowire having a core-shell structure of claim 1, wherein a content of copper oxide (CuO) contained in the core is 2 wt% or less of the total weight of the core.

6. The metal nanowire having a core-shell structure of claim 1, wherein in the metal nanowire, a FWHM of a (111) crystal plane of silver contained in the shell is larger than a FWHM of a (111) crystal plane of copper contained in the core.

7. The metal nanowire having a core-shell structure of claim 1, wherein the metal nanowire has an oxidation initiation temperature of 250°C or higher.

8. The metal nanowire having a core-shell structure of claim 1, wherein the peak intensity ($I_1$) of Ag $3d_{5/2}$ of silver and the peak intensity ($I_2$) of Cu $2p_{3/2}$ of copper in the X-ray photoelectron spectroscopy spectrum satisfy the following Equation 2:

(Equation 2)

$$I_2/I_1 \leq 0.05.$$

9. The metal nanowire having a core-shell structure of claim 1, wherein in a conductive film having a thickness of 8 um including the metal nanowire, a resistivity change rate is 1030 or less, the resistivity change rate being a ratio of a resistivity value measured after allowing the conductive film to stand for 10 days under a relative humidity of 60% and a temperature condition of 180°C to an initial resistivity value of the conductive film, expressed as a percentage.

10. A paste composition comprising the metal nanowire having a core-shell structure of any one of claims 1 to 9.

11. The paste composition of claim 10, further comprising a binder.

12. The paste composition of claim 11, wherein the binder is an organic binder or a ceramic binder.

[FIG. 1]

[FIG. 2]

EP 4 376 024 A1

[FIG. 3]

[FIG. 4]

17

[FIG. 5]

[FIG. 6]

## INTERNATIONAL SEARCH REPORT

| International application No. |
| --- |
| **PCT/KR2022/010629** |

### A. CLASSIFICATION OF SUBJECT MATTER

**H01B 1/02**(2006.01)i; **H01B 1/22**(2006.01)i; B82Y 40/00(2011.01)n

According to International Patent Classification (IPC) or to both national classification and IPC

### B. FIELDS SEARCHED

Minimum documentation searched (classification system followed by classification symbols)

H01B 1/02(2006.01); A61K 47/02(2006.01); B01J 13/02(2006.01); B22F 1/02(2006.01); B22F 9/14(2006.01); B82B 3/00(2006.01); B82Y 40/00(2011.01); H01B 13/00(2006.01); H01B 5/14(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 코어-쉘(core-shell), 금속(metal), 나노와이어(nanowire), 두께(thickness), 피크 (peak)

### C. DOCUMENTS CONSIDERED TO BE RELEVANT

| Category* | Citation of document, with indication, where appropriate, of the relevant passages | Relevant to claim No. |
| --- | --- | --- |
| Y | KR 10-2015-0098844 A (KOREA ATOMIC ENERGY RESEARCH INSTITUTE) 31 August 2015 (2015-08-31) See paragraphs [0071], [0085]-[0086], [0092], [0112]-[0113], [0115], [0126], [0132], [0134] and [0138]; claims 2-3 and 10; and figure 2. | 1-12 |
| Y | KR 10-2014-0058892 A (SAMSUNG FINE CHEMICALS CO., LTD.) 15 May 2014 (2014-05-15) See paragraphs [0027]-[0030], [0069] and [0079]; and figure 1. | 1-12 |
| A | KR 10-2019-0142240 A (INDUSTRY-UNIVERSITY COOPERATION FOUNDATION HANYANG UNIVERSITY ERICA CAMPUS) 26 December 2019 (2019-12-26) See paragraphs [0116]-[0117]; and figure 1. | 1-12 |
| A | KR 10-2011-0012795 A (SOGANG UNIVERSITY RESEARCH & BUSINESS DEVELOPMENT FOUNDATION) 09 February 2011 (2011-02-09) See paragraphs [0032]-[0036]; and figures 1-4. | 1-12 |

| ✓ Further documents are listed in the continuation of Box C. | ✓ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **28 October 2022** | **28 October 2022** |

| Name and mailing address of the ISA/KR | Authorized officer |
| --- | --- |
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2022/010629**

| C. | DOCUMENTS CONSIDERED TO BE RELEVANT | |
|---|---|---|
| Category* | Citation of document, with indication, where appropriate, of the relevant passages | Relevant to claim No. |
| A | KR 10-2013-0056903 A (DIC CORPORATION) 30 May 2013 (2013-05-30)<br>See paragraphs [0068]-[0120]; and figure 6. | 1-12 |

Form PCT/ISA/210 (second sheet) (July 2022)

**INTERNATIONAL SEARCH REPORT**
Information on patent family members

International application No.

**PCT/KR2022/010629**

| Patent document cited in search report | | | Publication date (day/month/year) | Patent family member(s) | | | Publication date (day/month/year) |
|---|---|---|---|---|---|---|---|
| KR | 10-2015-0098844 | A | 31 August 2015 | KR | 10-1550270 | B1 | 07 September 2015 |
| KR | 10-2014-0058892 | A | 15 May 2014 | None | | | |
| KR | 10-2019-0142240 | A | 26 December 2019 | KR | 10-2019-0142241 | A | 26 December 2019 |
| | | | | KR | 10-2221139 | B1 | 26 February 2021 |
| | | | | US | 2019-0382420 | A1 | 19 December 2019 |
| KR | 10-2011-0012795 | A | 09 February 2011 | KR | 10-1108654 | B1 | 31 January 2012 |
| KR | 10-2013-0056903 | A | 30 May 2013 | CN | 103328136 | A | 25 September 2013 |
| | | | | CN | 103328136 | B | 03 December 2014 |
| | | | | JP | 5077728 | B1 | 21 November 2012 |
| | | | | KR | 10-1495698 | B1 | 25 February 2015 |
| | | | | WO | 2012-133296 | A1 | 04 October 2012 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 101991964

- KR 101789213